# EUROPÄISCHE PATENTSCHRIFT

(11) **EP 0 541 095 B1**
(45) Veröffentlichungstag und Bekanntmachung des Hinweises auf die Patenterteilung: **14.02.1996**
(21) Anmeldenummer: 92118984.1
(22) Anmeldetag: 05.11.1992
(51) Int. Cl.: B62B 3/06

(54) **Gabelhubwagen**
Fork lift truck
Chariot élévateur à fourche

(30) Priorität: 08.11.1991 DE 4136820
(43) Veröffentlichungstag der Anmeldung: 12.05.1993
(73) Patentinhaber: Crown Gabelstapler GmbH, D-81677 München (DE)
(72) Erfinder: Nölle, Wolfgang, W-8000 München 50 (DE)
(74) Vertreter: Lieck, Hans-Peter, Dipl.-Ing.

(56) Entgegenhaltungen:
- EP-A- 0 541 094
- US-A- 3 246 713
- US-A- 4 886 284

## Beschreibung

Die Erfindung betrifft einen Gabelhubwagen mit einem Antriebsteil und mit einem Lastteil, das mittels Stelleinrichtungen relativ zum Antriebsteil in vertikaler Richtung bewegbar ist.

Hubwagen der eingangs genannten Art sind bekannt und dienen dem Ver- oder Umladen von isbesondere auf Paletten befindlichen Gütern. Sie nehmen hierzu die zu transportierenden Güter mittels des Lastteils des Gabelhubwagens auf und transportieren sie unter Vortrieb durch das Antriebsteil zum Bestimmungsort. Derartige Hubwagen können entweder mit einer Deichsel zum Lenken und zur Bedienung ausgestattet sein, oder aber als Aufsitz-Hubwagen mit einem Fahrersitz.

An Gabelhubwagen der eingangs genannten Art werden im allgemeinen die Anforderungen gestellt, daß sie im Betrieb zuverlässig und robust zu sein haben und zudem bei einem möglichst einfachen Aufbau möglichst vielseitige Funktionsmöglichkeiten bieten.

Aus der Druckschrift EP-A- 0 541 094, die als Stand der Technik gemäß Artikel 54(3) und (4) EPü gilt, ist ein Gabelhubwagen bekannt, mit einem Antriebsteil und mit einem Lastteil, des mittels Stelleinrichtungen relativ zum Antriebsteil in vertikaler Richtung bewegbar ist, wobei zwischen dem Antriebsteil und dem Lastteil ein Zwischenrahmen vorgesehen ist, und wobei das Antriebsteil und das Lastteil mittels mindestens je einer Stelleinrichtung in vertikaler Richtung bewegbar ist.

Aus der Druckschrift DE 1 787 367 ist ein Gabelhubwagen bekannt, der ein Antriebsteil und ein relativ zum Antriebsteil durch zwei Hydraulikzylinder höhenbewegbares Lastteil aufweist. Ferner besitzt dieser Hubwagen eine an die Relativbewegung zwischen Antriebsteil und Lastteil gekoppelte Höhensteuereinrichtung, die beim Anheben des Lastteils ein Ausschwenken von unter dem Lastteil angelenkten Lastrollen bewirkt.

Die Nachteile dieses bekannten Hubwagens liegen insbesondere darin, daß dieser Hubwagen keine Rampen, d. h. keine schrägen Fahrbahnen befahren kann, ohne daß seine Lastträgerebene ebenfalls schief wird. Letzteres ist aber beim Befahren einer Rampe mit auf dem Lastträger gestapelter Last unerwünscht, da diese von dem Lastträger herunterfallen kann. Dieser bekannte Gabelhubwagen ist somit in seinen Funktionsmöglichkeiten zu sehr eingeschränkt.

Aufgabe der vorliegenden Erfindung ist es, einen Gabelhubwagen der eingangs genannten Art anzugeben, dessen zweckgemäßer Betrieb, nämlich das Heben und Senken sowie Transportieren von Lasten, vielseitigere Funktionsmöglichkeiten bietet.

Diese Aufgabe wird bei einem Gabelhubwagen der eingangs genannten Art erfindungsgemäß dadurch gelöst, daß zwischen dem Antriebsteil und dem Lastteil ein Zwischenrahmen ist, und daß das Antriebsteil und das Lastteil jeweils unabhängig voneinander relativ zum Zwischenrahmen mittels mindestens je einer Stelleinrichtung in vertikaler Richtung bewegbar sind.

Die Vorteile der erfindungsgemäßen Lösung liegen insbesondere darin, daß der von den Relativbewegungen des Antriebsteils und des Lastteils unabhängige Zwischenrahmen die Vielseitigkeit des Gabelhubwagens erhöht und insbesondere - was anhand von vorteilhaften Weiterbildungen der Erfindung noch erläutert werden wird - auch das Befahren schräger Fahrbahnen trotz unter dem Lastträger angeordneter Lastrollen.

Bevorzugte Weiterbildungen der Erfindung sind in den Unteransprüchen angegeben.

Für einen Gabelhubwagen, bei welchem unter dem Lastteil im Abstand vom Antriebsteil zur Abstützung des Lastteils mindestens eine Lastrolle vorgesehen ist, deren vertikaler Abstand zum Lastteil mittels einer Höhensteuereinrichtung verstellbar ist, ist vorzugsweise vorgesehen, daß die Höhensteuereinrichtung jede Lastrolle in Abhängigkeit von der Relativbewegung zwischen dem Lastteil und dem Zwischenrahmen verstellt. Hierbei ist es aus dem Stand der Technik bekannt, daß das Lastteil zum Unterfahren und Aufladen von Paletten einen winklig zur relativen Bewegungsrichtung des Lastteils angeordneten Lastträger mit den darunter an schwenkbaren Achsgabeln gelagerten Lastrollen aufweist. Die Höhensteuereinrichtung schwenkt jene Achsgabeln und damit die daran gelagerten Lastrollen mittels eines Gestänges. Mit dem so ausgestatteten erfingungsgemäßen Gabelhubwagen können im wesentlichen drei Betriebszustände eingenommen werden.

Im ersten Betriebszustand befinden sich die Lastrollen des Lastteils und die Antriebsräder des Antriebsteils auf einer gemeinsamen horizontalen Ebene. Der Lastträger ist abgesenkt, die unter dem Lastträger befindlichen Lastrollen sind im wesentlichen in die Ebene des Lastträgers eingeschwenkt und das Antriebsteil und das Lastteil befinden sich in ihrem Grundzustand ohne gegenseitige relative Verschiebung in zur Fahrbahn senkrechter Richtung.

Der zweite Betriebszustand ist durch ein paralleles Anheben des Lastträgers gegenüber dem Antriebsteil unter Ausschwenken der Lastrollen aus der Ebene des Lastträgers gekennzeichnet. Der Hubwagen ist horizontal ausgerichtet; die Lastrollen stützen den Lastträger und laufen mit den Antriebsrädern auf einer gemeinsamen horizontalen Fahrbahn.

Der dritte Betriebszustand ist durch einen " Stufenhub" gekennzeichnet, bei dem das Lastteil gegenüber dem Antriebsteil zwar angehoben ist, die Lastrollen jedoch - im Gegensatz zu dem eingangs genannten bekannten Hubwagen - in die Ebene des Lastträgers eingeschwenkt sind. Bei dem bekannten Hubwagen der eingangs genannten Art aufgrund der erfolgten Relativbewegung zwischen Antriebsteil und Lastteil die Lastrollen ausgeschwenkt, so daß der Lastträger eine schiefe Ebene bilden würde. Der erfindungsgemäße Hubwagen befährt in diesem Betriebszustand eine schräge Ebene, beispielsweise eine Rampe, wobei die Lastträger-Ebene horizontal gehalten wird.

Besonders bevorzugterweise weist die Höhensteuereinrichtung einen bogenförmigen Schwenkhebel auf, dessen eines Ende über das Gestänge gelenkig mit den Achsgabeln der Lastrollen verbunden ist, dessen anderes Ende in Wirkverbindung mit dem Zwischenrahmen steht, und der um eine zwischen seinen Enden angeordnete Schwenkachse schwenkbar ist. Der bogenförmige Schwenkhebel dient somit der Übertragung einer Relativbewegung zwischen Antriebsteil und Lastteil auf die Lastrollen. Seine Bogenform ist insbesondere deshalb von Vorteil, weil der Schwenkhebel dadurch verhältnismäßig gut in die Gesamtkonstruktion integrierbar ist, ohne die geringstmögliche Bodenfreiheit des Lastträgers über der Fahrbahn einzuschränken.

Zur Übertragung einer Relativbewegung zwischen Lastteil und Zwischenrahmen auf dem bogenförmigen Schwenkhebel und damit auf die Achsgabeln der Lastrollen ist in vorteilhafter Weise vorgesehen, daß der Zwischenrahmen wenigstens einen ersten L-förmigen Basisschenkel aufweist, der in Wirkverbindung mit dem bogenförmigen Schwenkhebel steht.

Vorzugsweise besitzt der Schwenkhebel an seinem dem Gestänge abgewandten Ende eine Gleitrolle, welche auf der Unterseite des ersten Basisschenkels des Zwischenrahmens gleitend gelagert ist. Alternativ zu dieser Gleitführung kann auch ein gelenkiges Zwischenstück vorgesehen sein, das zwischen dem einen Ende des Schwenkhebels, welches dem Gestänge abgewandt ist, und dem ersten Basisschenkel des Zwischenrahmens eingesetzt ist. Jedoch ist die Gleitlager-Lösung aufgrund der einfacheren Mechanik vorzuziehen. Die Relativbewegung zwischen dem Ende des bogenförmigen Schwenkhebels und dem ersten Basisschenkel des Zwischenrahmens in im wesentlichen horizontaler Richtung wird durch die als Gleitlager wirkenden Unterseite des ersten Basisschenkels des Zwischenrahmens aufgefangen.

Eine einfach zu realisierende und dabei äußerst zuverlässige Ausführungsform der wenigstens Stelleinrichtungen liegt darin, diese als Hydraulikzylinder auszubilden.

Mit den folgenden Weiterbildungen werden zwei alternative Ausführungsformen des erfindungsgemäßen Gabelhubwagens aufgezeigt. Eine erste Ausführungsform besteht darin, daß die Hydraulikzylinder mit ihrem Zylindergehäuse am Zwischenrahmen befestigt sind, und daß die Kolbenstange des einen Hydraulikzylinders mittels Halterungen am Lastteil befestigt ist, während die Kolbenstange des anderen Hydraulikzylinders mittels Halterungen am Antriebsteil fixiert ist.

Alternativ hierzu ist eine zwischen beiden Alternativen bevorzugte Konstruktion möglich, nach der beide Hydraulikzylinder auf einer gemeinsamen Kolbenstange sitzen und daß der eine Hydraulikzylinder mit einem Flansch am Lastteil befestigt ist, und der andere Hydraulikzylinder mit einem weiteren Flansch am Antriebsteil. Die zweite und bevorzugte Ausführungsform ist insbesondere deshalb von Vorteil, da sie eine Verringerung der Länge des Hubwagens ermöglicht. Da die Verkehrswege in Lagerräumen und auch die zu beladenden Transportmittel, z. B. Lastkraftwagen, eng sind, besteht an Hubwagen nämlich die Anforderung, daß sie eine möglichst geringe Länge bei maximaler Transportleistung haben sollten. Die Länge des Hubwagens beeinflußt insbesondere den Wendekreis des Hubwagens, an dem sich beispielsweise die zwischen Lagerregalen einzuhaltenden Freiräume orientieren.

Für die zweite Ausführungsform ist vorzugsweise vorgesehen, daß der Zwischenrahmen einen dem ersten Basisschenkel gegenüberliegenden zweiten L-förmigen Basisschenkel aufweist, und daß die gemeinsame Kolbenstange zwischen dem ersten und dem zweiten Basisschenkel gehaltert ist. Somit bilden der Zwischenrahmen mit seinen beiden Basisschenkeln und die Kolbenstange insgesamt eine zwischen Antriebsteil und Lastteil "schwimmende" Einheit, die unabhängig von den Relativbewegungen des Lastteils und des Antriebsteils ist.

Besonders bevorzugterweise sind die Hydraulikzylinder über eine hydraulische Steuereinrichtung zusammengeschlossen, mit der in vorteilhafter Weise vielfältige Betriebszustände eingenommen werden können.

Für eine bessere Kräfteverteilung ist vorzugsweise vorgesehen, daß die Höhensteuereinrichtung, das Gestänge, der Zwischenrahmen sowie die wenigstens zwei Stelleinrichtungen doppelt vorhanden sind, und zwar je einmal zu beiden Seiten des Hubwagens.

Im folgenden werden ein erstes Ausführungsbeispiel sowie ein zweites, bevorzugtes Ausführungsbeispiel der Erfindung anhand einer Zeichnung näher erläutert.

Es zeigen:
- Figur 1: einen Längsschnit durch ein erstes Ausführungsbeispiel eines Gabelhubwagens im (Grund-)Betriebszustand I
- Figur 2: eine der Figur 1 entsprechende Darstellung, jedoch im Betriebszustand II (Parallelhub);
- Figur 3: eine der Figur 1 entsprechende Darstellung, jedoch im Betriebszustand III (Stufenhub);
- Figur 4: eine der Figur 1 entsprechende Darstellung, jedoch im Betriebszustand IV (Doppel-Stufenhub);
- Figur 5: ein schematisches Schaltbild einer hydraulischen Steuereinrichtung für das Ausführungsbeispiel eines Hubwagens gemäß den Figuren 1 - 4;
- Figur 6: einen Längsschnitt durch ein zweites, bevorzugtes Ausführungsbeispiel eines Gabelhubwagens im (Grund-)Betriebszustand I;
- Figur 7: eine der Figur 6 entsprechende Darstellung, jedoch im Betrtiebszustand II (Parallelhub); und
- Figur 8: eine der Figur 6 entsprechende Darstellung, jedoch im Betriebszustand III (Stufenhub).

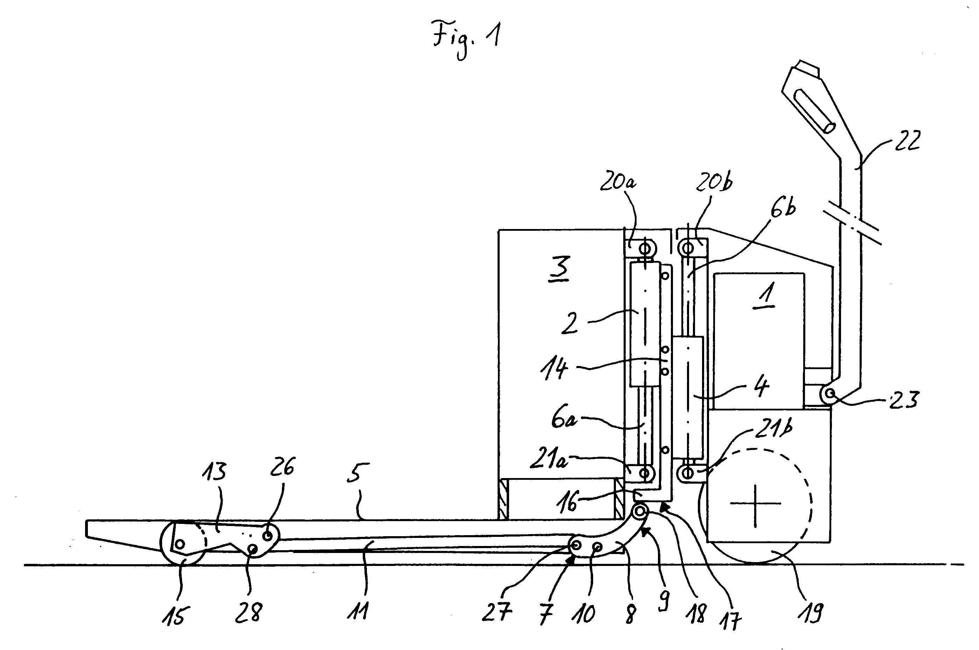

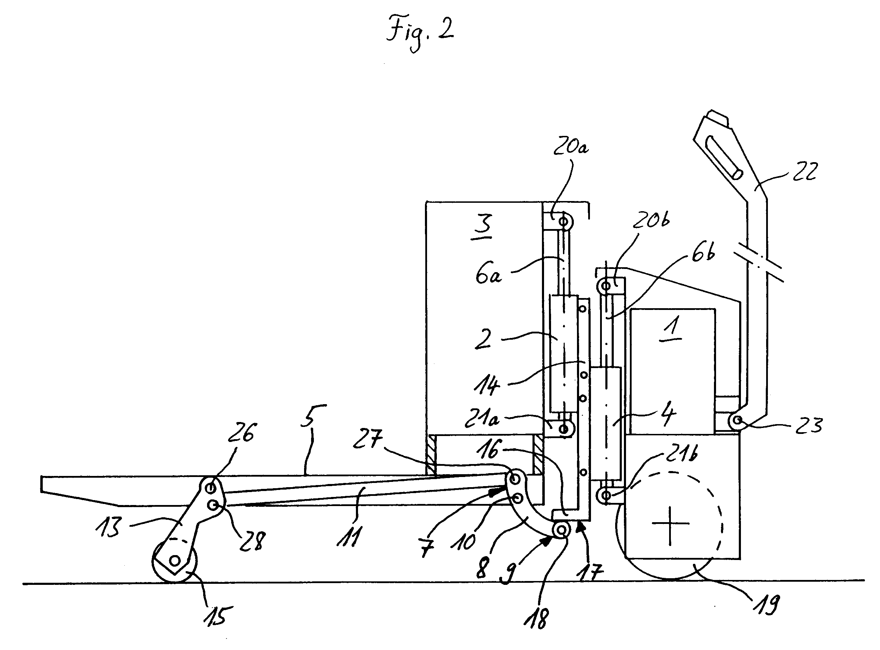

Figur 1 zeigt einen Längsschnitt durch einen Gabelhubwagen im (Grund-)Betriebszustand I, in welchem der Hubwagen auf einer horizontalen Ebene steht. Der Hubwagen besitzt im wesentlichen ein Antriebsteil 1 und ein parallel zum Antriebsteil 1 geführtes Lastteil 3, das mittels einer Doppel-Hydraulikzylinderanordnung 2,4 relativ zum Antriebsteil 1 - und auch relativ zu einem Zwischenantriebsteil 1 und Lastteil 3 angeordneten Zwischenrahmen 14 - höhenbewegbar ist. Antriebsteil 1 und Lastteil 3 sind somit unabhängig voneinander in vertikaler Richtung relativ zum Zwischenrahmen 14 bewegbar. Das Lastteil 3 weist ferner einen in einem Winkel von etwa 90° zur relatiiven Bewegungsrichtung angeordneten Lastträger 5 mit darunter an schwenkbaren Achsgabeln 13 angeordneten Lastrollen 15 auf. Diese Lastrollen dienen der Abstützung des Lastträgers gegen die Fahrbahn, wobei die Lastrollen 15 in dem in dieser Figur dargestellten Betriebszustand auf einer horizontalen Fahrbahn zusammen mit den Antriebsrädern 19 des Antriebsteils 1 ruhen. Damit der Hubwagen beim Anheben einer Last seine zur Fahrbahn parallele, horizontale Ausrichtung beibehält, schwenken die Lastrollen 15 an den Achsgabeln 13 aus der Ebene des Lastträgers nach unten heraus (Figur 2), und zwar entsprechend dem Maß der Relativbewegung zwischen Lastteil 3 und Zwischenrahmen 14.

Der Zwisschenrahmen 14 ist im Längsschnitt im wesentlichen stangenförmig ausgebildet und besitzt an seinem unteren Ende einen ersten L-förmigen Basisschenkel 16, der über seine Unterseite 17 mit dem Ende 9 eines bogenförmigen Schwenkhebels 8 in Wirkverbindung steht. Der bogenförmige Schwenkhebel 8 stellt den wesentlichen Teil einer Höhensteuereinrichtung dar, die eine Relativbewegung zwischen dem Lastteil 3 und dem Zwischenrahmen 14 über ein Gestänge 11 auf die Achsgabeln 13 der Lastrollen 15 überträgt, woraufhin die Achsgabeln in die Ebene des Lastträgers 5 eingeschwenkt oder aber aus dieser ausgeschwenkt werden.

Der bogenförmige Schwenkhebel 8 weist an seinem dem Gestänge 11 abgewandten Ende 9 eine Gleitrolle 18 auf, welche auf der Unterseite 17 des ersten Basisschenkels 16 des Zwischenrahmens 14 gleitend gelagert ist. Die Unterseite 17 des Zwischenrahmens 14 bildet somit ein Gleitlager für die Rolle 18 des Schwenkhebels 8, mit der die Relativbewegungen zwischen Schwenkhebel 8 und Basisschenkel 16 des Zwischenrahmens 14 in horizontaler Richtung aufgefangen werden. Die Rolle 18 ist an dem einen Ende 9 des bogenförmigen Schwenkhebels 8 drehbar befestigt, und das andere Ende 7 des Schwenkhebels 8 ist über eine Achse 27 mit dem Gestänge 11 verbunden, welches seinerseits über eine Achse 28 bewegbar mit den Achsgabeln 13 verbunden ist. Ferner ist der Schwenkhebel 8 um eine seinen Enden 7,9 angeordnete Schwenkachse 10 schwenkbar am Lastteil 3 befestigt.

Die beiden Hydraulikzylinder 2,4 sind mit ihren Zylindergehäusen höhenversetzt an dem Zwischenrahmen 14 befestigt, so daß die Hydraulikzylinder 2,4 und der Zwischenrahmen 14 eine feste, zwischen Antriebsteil 1 und Lastteil 3 "schwimmende" Einheit bilden. Die Kolbenstange 6a des Hydraulikzylinders 2 ist mittels einer oberen Halterung 20a und einer unteren Halterung 21a an dem Lastteil 3 befestigt, während die Kolbenstange 6b des anderen Hydraulikzylinders 4 mittels ebenfalls einer oberen Halterung 20b und einer unteren Halterung 21b am Antriebsteil 1 befestigt ist.

Das Antriebsteil 1 ist mit einer Deichsel 22 ausgerüstet, die um eine Achse 23 schwenkbar mit dem Antriebsteil 1 verbunden ist und das Bedienfeld für den Gabelhubwagen trägt.

In dem in der Figur 1 dargestellten (Grund-)Betriebszustand I befinden sich das Antriebsteil 1 und das Lastteil 3 ohne gegenseitige Relativverschiebung in ihrer Grundstellung, bei der die Lastrollen 15 und die Antriebsräder 19 auf einer gemeinsamen horizontalen Fahrbahn ruhen. In diesem Betriebszustand I befindet sich der Hydraulikzylinder 2 in seiner oberen Stellung und der Hydraulikzylinder 4 in seiner unteren Stellung, und die Achsgabeln 13 sind im wesentlichen in die Ebene des Lastträgers 5 eingeschwenkt. Der Funktionsablauf beim Wechsel von dieser Grundstellung in den Betriebszustand II (Parallelhub) oder den Betriebszustand III (Stufenhub) oder den Betriebszustand IV (Doppel-Stufenhub) und die Funktionsabläufe beim Wechsel zwischen diesen Betriebszuständen werden nachstehend anhand der Figuren 2 - 4 unter permanenter Rückschau auf die Figur 1 erläutert.

Figur 2 zeigt den Gabelhubwagen gemäß Figur 1 in Betriebszustand II, welcher durch den Parallelhub des Lastträgers 5 im Verhältnis zur Fahrbahn gekennzeichnet ist. In diesem Betriebszustand sind die Lastrollen 15 an den Achsgabeln 13 aus ihrer Ruhelage herausgeschwenkt und stützen den Lastträger 5 ab. Ferner ist in diesem Betrienbszustand das Lastteil 3 gegenüber dem Antriebsteil 1 und - was wesentlicher ist - gegenüber dem Zwischenrahmen 14 nach oben bewegt, was durch ein Hochfahren der Kolbenstange 6a des linken Hydraulikzylinders 2 mit dem daran hängenden Lastteil 3 erfolgt ist. Die durch das Hochfahren der Kolbenstange 6a hervogerufene Relativbewegung zwischen dem Lastteil 3 und dem Zwischenrahmen 14 teilt sich den Achsgabeln 13 über die Höhensteuereinrichtung, bestehend aus dem bogenförmigen Schwenkhebel 8 und im eigentlichen Sinne auch aus der Unterseite 17 des Basisschenkels 16, mit. Durch das Anheben der Kolbenstange 6a wird nämlich auch die Schwenkachse 10 des bogenförmigen Schwenkhebels 8 angehoben, während das Ende 9 des Schwenkhebels 8 mit der dort drehbar angebrachten Gleitrolle 18 in der Unterseite 17 des Basisschenkels 16 des Zwischenrahmens 14 ein Gegenlager findet, wodurch der bogenförmige Schwenkhebel 8 bei der Bewegung vom Betriebszustand I in den Betriebszustand II im Uhrzeigersinn um seine Schwenkachse geschwenkt wird.

Durch diese Schwenkbewegung wird das Ende 7 des Schwenkhebels 8 ebenfalls im Uhrzeigersinn gedreht, wodurch die Achsgabeln 13 über das Gestänge 11 ausgeschwenkt werden, welches an den Achsen 27, 28 gelenkig mit den Achsgabeln 13 bzw. dem Ende 7 des bogenförmigen Schwenkhebels 8 verbunden ist.

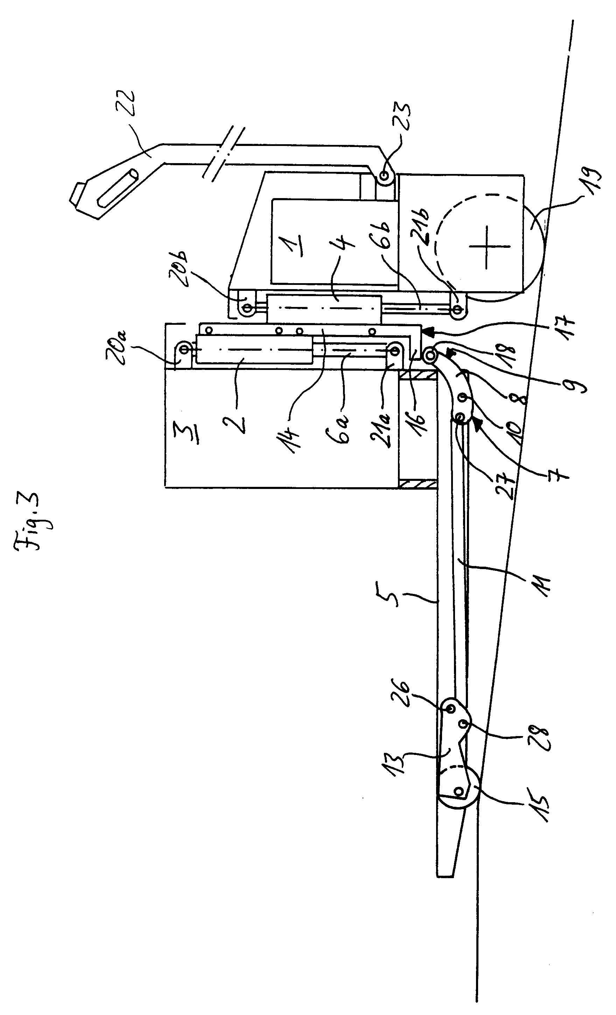

Figur 3 zeigt den Gabelhubwagen gemäß Figur 1 im Betriebszustand III, der durch einen Stufenhub des Lastteils 3 gegenüber dem Antriebsteil 1 gekennzeichnet ist. In diesem Betriebszustand ist das Lastteil 3 gegenüber dem Antriebsteil 1 angehoben (wie im Betriebszustand II gemäß Figur 2), jedoch sind die Achsgabeln 13 in der Ebene des Lastträgers 5 eingesschwenkt geblieben. Der Hubwagen kann in diesem Betriebszustand III schräge Ebenen, z. B. Laderampen befahren und dabei die Ausrichtung der Lastträgerebene horizontal halten. Der maximale Anstieg der zu befahrenden Ebene wird durch das maximale Maß der relativen Verschiebung zwischen Lastteil 3 und Antriebsteil 1 in zur Lastträgerebene senkrechter Richtung bestimmt.

Das Ergebnis des Betriebszustands III, die zurückgeschwenkten Achsgabeln 13, ist durch ein Anheben der "schwimmenden" Zwischenrahmenkonstruktion, bestehend aus dem Zwischenrahmen 14 und den beiden daran befestigten Hydraulikzylindern 2,4, möglich geworden. Diese Bewegung der beiden parallelen Hydraulikzylinder 2,4 läuft im Grunde genommen in zwei Phasen gleichzeitig wie folgt ab: Der linke Hydraulikzylinder 2 fährt relativ zu seiner Kolbenstange 6a nach oben, wodurch er seine ursprüngliche Bewegung auf dem Wege von dem Betriebszustand I in den Betriebszustand II rückgängig macht. Durch diesen Rückzug in seine vorherige Position bewirkt der Hydraulikzylinder 2 zunächst eine Relativbewegung zwischen dem Lastteil 3 und dem Zwischenrahmen 14, wodurch der bogenförmige Schwenkhebel 8 im entgegengesetzten Uhrzeigersinn um seine Schwenkachse 10 gedreht und die Achsgabeln 13 in die Ebene des Lastträgers 5 eingeschwenkt werden. In einer zweiten, gleichzeitig mit der ersten ablaufenden Phase, bewegt sich der rechte Hydraulikzylin der 4 relativ zu seiner Kolbenstange 6b nach oben, was für sich gesehen eine Relativbewegung zwischen Antriebsteil 1 und Zwischenrahmen 14 bewirkt. Insgesamt erfolgt somit eine Relativbewegung zwischen Antriebsteil und Lastteil beim Verschwenken der Achsgabeln 13.

Fährt der Hubwagen auf einer schiefen Ebene (Figur 3) im Betriebszustand III und gerät dann wieder auf eine horizontale Fahrbahn, so muß von dem Betriebszustand III in den Betriebszustand II gewechselt werden, was auf dem umgekehrten Wege wie vorstehend beschrieben erfolgt.

Ein Absenken des Lastteils 3 gegenüber dem Antriebsteil 1 aus dem Betriebszustand II in den (Grund-)Betriebszustand I erfolgt durch Absenken der Kolbenstange 6a mit dem daran befestigten Lastteil 3, wobei durch die dabei Relativbewegung zwischen Antriebsteil 1 und Lastteil 3 der bogenförmige Schwenkhebel 8 im entgegengesetzten Uhrzeigersinn um seine Schwenkachse 10 geschwenkt wird und dadurch die Achsgabeln 13 eingeschwenkt werden.

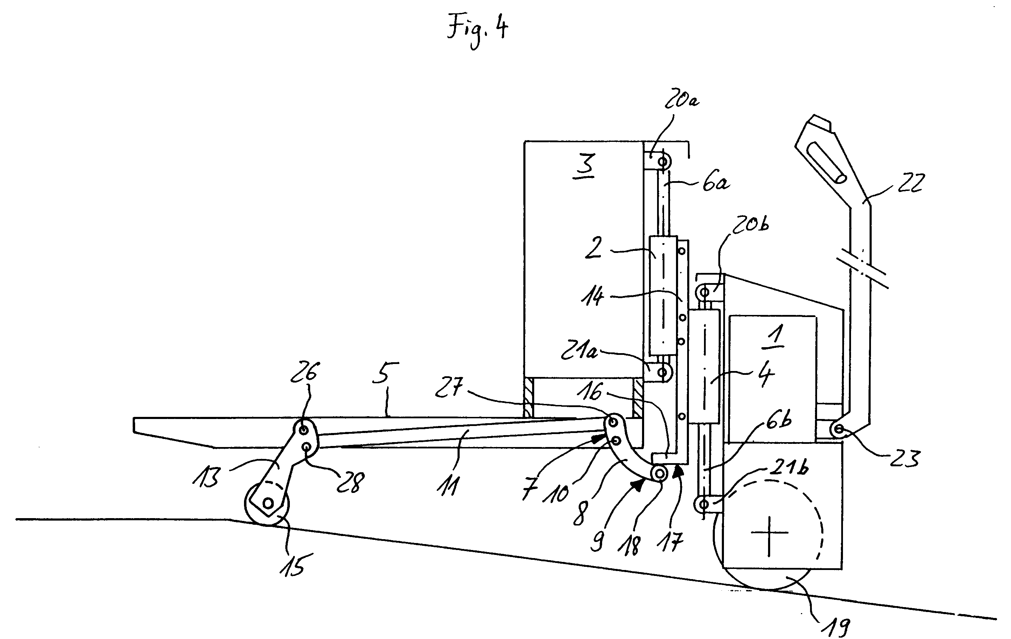

Figur 4 zeigt den Gabelhubwagen gemäß Figur 1 im Betriebszustand IV, der durch einen Doppel-Stufenhub des Lastteils 3 gegenüber dem Antriebsteil 1 gekennzeichnet ist. In diesem Betriebszustand ist das Lastteil 3 gegenüber dem Zwischenrahmen 14 angehoben, während das Antriebsteil 1 gegenüber dem Zwischenrahmen 14 abgesenkt ist. Durch die dabei erfolgte Relativbewegung zwischen Antriebsteil 1 und Lastteil 3 wurde der bogenförmige Schwenkhebel 8 im Uhrzeigersinn um seine Schwenkachse 10 gedreht, so daß die Achsgabeln 13 aus ihrer Ruhelage herausgeschwenkt sind.

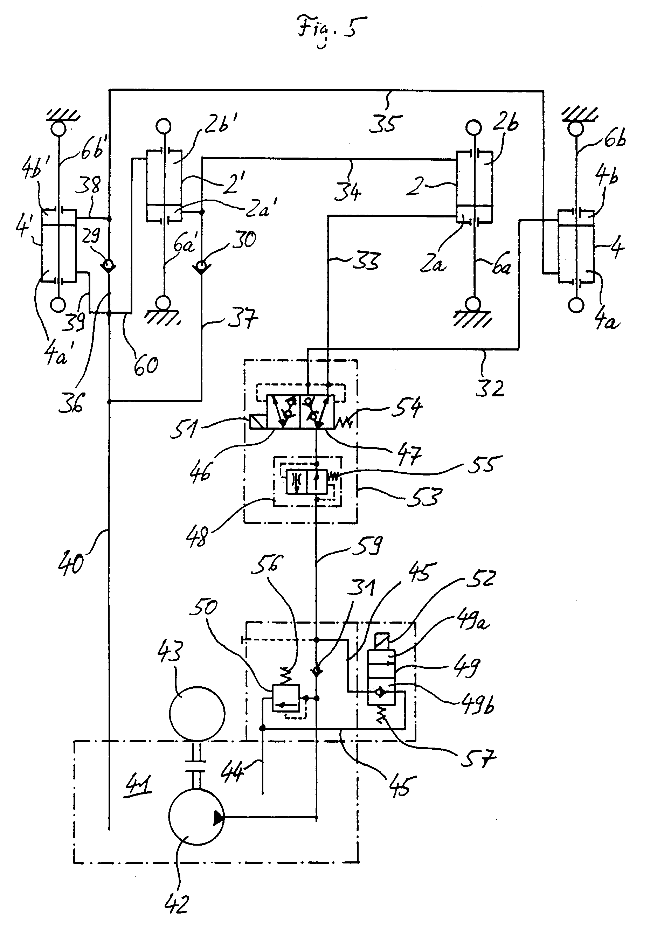

Figur 5 zeigt ein hydraulisches Schema für die Ausführungsform eines Hubwagens gemäß den Figuren 1 - 4. Die hydraulische Stelleinrichtung weist eine von einem Motor 43 angetriebene Hydraulikpumpe 42 auf, welche Druckmittel über eine Hauptzuleitung 59 wahlweise über den Druckmittelanschluß 32 zu dem oberen Arbeitsraum 4b des Hydraulikzylinders 4 oder über den Druckmittelanschluß 33 dem unteren Arbeitsraum 2a des Hydraulikzylinders 2 zuführt. Gemäß vorliegender Schaltung wird nur das rechte Hydraulikzylinderpaar 2,4 direkt von der Pumpe 42 angesteuert, während das auf der linken Seite des Hubwagens befindliche linke Hydraulikzylindepaar 2', 4' in Abhängigkeit vom Betrieb des rechten Zylinderpaars 2,4 arbeitet. Die Druckmittelanschlüsse 38,39 des linken Zylinderpaares 2', 4' sind nämlich über die Verbindungsleitungen 34, 35 mit dem oberen Arbeitsraum 2b des Hydraulikzylinders 2 bzw. mit dem unteren Arbeitsraum 2a des Hydraulikzylinders 4 verbunden. Somit werden die entsprechenden Arbeitsräume 2a', 4b' des linken Zylinderpaares von den Arbeitsräumen 2b, 4a des rechten Zylinderpaares mit Hydraulikflüssigkeit versorgt. Diese Kammern bilden gemeinsam ein geschlossenes System, und folglich bewegen sich die linken Hydraulikzylinder 2', 4' in Abhängigkeit von der Ansteuerung der rechten Hydraulikzylinder 2, 4 durch die Pumpe 42.

In die Hauptzuleitung 59 ist der Pumpe 42 nachgeschaltet zunächst ein Rückschlagventil 31 und nachfolgend eine Schiebereinheit 53 eingebaut. Die Schiebereinheit 53 umfaßt einen Drosselschieber 48 und einen zwischen den Druckmittelanschlüssen 32,33 des rechten Zylinderpaares und dem Drosselschieber 48 angeordnetes Steuerschieberpaar 46, 47. Der Drosselschieber 48 ist über einen hier nicht dargestellten Betätigungsmagneten gegen eine Feder 55 bewegbar und dient der Drosselung der Druchflußgeschwindigkeit des Druckmittels beim Absenken des Lastträgers 5 unter großer Last.

Die Steuerschieber 46,47 besitzen jeweils ein Durchlaßteil und ein Sperrteil und sind über einen gemeinsamen Betätigungsmagneten 51 gegen eine Feder 54 bewegbar. In der in der Figur 5 dargestellten Position ist der Druckmittelanschluß 32 des rechten Hydraulikzylinders 4 gesperrt und der Druckmittelanschluß 33 des rechten Hydraulikzylinders 2 wird durch die Hydraulikpumpe 42 aus dem Druckmitteltank 41 mit Hydrauliköl versorgt.

Die Verbindungsleitung 34 zwischen den Hydraulikzylindern 2, 2' ist über Ansaugleitungen 37, 40 unter Zwischenschaltung eines Rückschlagventils 30 mit dem Druckmitteltank 41 verbunden. Desweiteren ist die Verbindungsleitung 35 zwischen den Hydraulikzylindern 4, 4' über die Ansaugleitungen 36, 40 unter Zwischenschaltung eines weiteren Rückschlagventils 29 mit dem Druckmitteltank 41 verbunden. Schließlich führt eine weitere Ansaugleitung 60 von dem oberen Arbeitsraum 2b' des linken Hydraulikzylinders 2' zu der Ansaugleitung 36, und eine weitere Ansaugleitung 39 führt von dem unteren Arbeitsraum 4a' des linken Hydraulikzylinders 4' ebenfalls zu der Ansaugleitung 36.

Hinter dem Rückschlagventil 31 in der Hauptzuleitung 59 zweigt eine Ablaßleitung 45 ab, in der ein Ablaßschieber 49 mit einem Durchlaßteil 49a und einem Sperrteil 49b angeordnet ist, welcher durch einen Betätigungsmagneten 52 gegen eine Feder 57 betätigbar ist. Dieser Ablaßschieber wird zusammen mit den Steuerschiebern 46, 47 eingesetzt, um zwischen den verschiedenen Betriebszuständen I - IV zu wechseln bzw. Zwischenstufen einzunehmen.

Die Ablaßleitung 45 mündet in eine weitere Ablaßleitung 44 eines Sicherheitsschiebers 50 der durch einen hier nicht dargestellten Betätigungsmagneten gegen eine Feder 56 betätigbar ist. Der Sicherheitsschieber stellt eine Überdruckscherung dar, die beispielsweise auf 120 bar eingestellt sein kann.

Der in Figur 5 dargestellte Schaltzustand entspricht dem (Grund-)Betriebszustand I gemäß Figur 1. Für einen Übergang in den Betriebszustand II, d. h. für ein paralleles Anheben des Lastträgers 5 unter Ausschwenken der Lastrollen 15 wird der Steuerschieber 47 in der dargestellten Position geschaltet, so daß der Druckmittelanschluß 32 des Hydraulikzylinders 4 gesperrt ist, während dem Hydraulikzylinder 2 über den Druckmittelanschluß 33 Hydraulikflüssigkeit zugeführt wird. Daraufhin wird sich die Kolbenstange 6a des Hydraulikzylinders 2 mit dem daran befestigten Lastteil 3 relativ zum Zylindergehäuse nach oben bewegen. Bei dieser Bewegung wird dem unteren Arbeitsraum 2a' des abhängigen Hydraulikzylinders 2' aus dem oberen Arbeitsraum 2b des Hydraulikzylinders 2 über die Verbindungsleitung 34 Druckmittel zugeführt, so daß der abhängige Hydraulikzylinder 2' sich ebenfalls relativ zu seiner Kolbenstange 6a' absenkt.

Zum Wechsel von dem Betriebszustand II (Parallelhub; Figur 2) in den Betriebszustand III (Stufenhub; Figur 3) bleibt in einer ersten Phase zunächst der Steuerschieber 47 auf Durchlaß geschaltet und der Ablaßschieber 49 wird zusätzlich auf Durchlaß geschaltet, in dem die Ablaßleitung 45 mit dem Durchlaßteil 49a des Ablaßschiebers 49 verbunden wird,woraufhin sich die Kolbenstange 6a des Hydraulikzylinders 2 (und auch die Kolbenstange 6a' des Hydraulikzylinders 2') unter dem Druck des daran hängenden Lastteils 3 absenkt und sich die in dem unteren Arbeitsraum 2a (bzw. 2a') befindlliche Hydraulikflüssigkeit über den Druckmittelanschluß 33, den Steuerschieber 47, den Drosselschieber 48, die Hauptzuleitung 59, die Ablaßleitung 45, den Ablaßschieber 49a und die Ablaßleitung 44 in den Druckmitteltank 41 entleert. In einer zweiten Phase wird der Steuerschieber 46 über dem Betätigungsmagneten 51 gegen die Wirkung der Feder 54 auf Durchlaß geschaltet, so daß die Hauptzuleitung 59 und der Druckmittelanschluß 32 des rechten Hydraulikzylinders 4 miteinander verbunden sind. Jetzt pumpt die Pumpe 42 Hydraulikflüssigkeit in den oberen Arbeitsraum 4b des Hydraulikzylinders, woraufhin sich die Kolbenstange 6b und das daran befestigte Antriebsteil 1 absenken.

Der Übergang von dem Betriebszustand III in den Betriebszustand II, der am oberen Ende einer Rampe beim Wechsel auf eine horizontale Fahrbahn erfolgt, ist auf umgekehrten Wege steuerbar.

Für einen Übergang von dem Betriebszustand III (Stufenhub; Figur 3) in den (Grund-)Betriebszustand I gemäß Figur 1 ist der Druckmittelanschluß 32 des rechten Hydraulikzylinders 4 über den Steuerschieber 46 mit der Hauptzuleitung 59 auf Durchlaß zu verbinden und ferner der Ablaßschieber 49 auf Durchlaß zu schalten, so daß sich der Hydraulikzylinder 4 (und parallel dazu der Hydraulikzylinder 4') unter der Last des Lastteils 3 relativ zur Kolbenstange 6b bzw. 6b' absenkt und die in dem oberen Arbeitsraum 4b befindliche Hydraulikflüssigkeit über den Druckmittelanschluß 32, den Steuerschieber 46, den Drosselschieber 48, die Hauptzuleitung 59, die Ablaßleitung 45, den Ablaßschieber 49a und über die Ablaßleitung 44 in den Druckmitteltank 41 zurückgepumpt wird. Hierbei erfolgt eine Relativbewegung zwischen Antriebsteil 1 und Lastteil 3, die ohne Einfluß auf die Höhensteuereinrichtung bleibt, weshalb die Lastrollen 15 nicht geschwenkt werden.

Für den umgekehrten Übergang vom (Grund-)Betriebszustand I in den Betriebszustand III ist der Ablaßschieber 49 auf "sperren" zu schalten und der Steuerschieber 46 auf Durchlaß und dem oberen Arbeitsraum 4b des Hydraulikzylinders 4 über den Druckmittelanschluß 32 Hydraulikflüssigkeit zuzuführen.

Zum Absenken des Lastträgers 3 aus dem Betriebszustand II in den (Grund-)Betriebszustand I ist der Steuerschieber 47 für den Druckmittelanschluß 33 des Hydraulikzylinders 2 sowie der Ablaßschieber 49 auf Durchlaß zu schalten, woraufhin sich die Kolbenstange 6a unter der Last des Lastträgers 3 absenkt und über die Ansaugleitungen 40, 37 und die Verbindungsleitung 34 Druckmittel in den oberen Arbeitsraum 2b des Hydraulikzylinders 2 angesaugt wird.

Um beispielsweise von dem Betriebszustand II gemäß Figur 2 in den Betriebszustand IV gemäß Figur 4 zu gelangen, ist dem Druckmittelanschluß 32 des rechten Hydraulikzylinders 4 über den Steuerschieber 46 Hydraulikflüssigkeit zuzuführen, woraufhin sich der Hydraulikzylinder 4 relativ zu seiner Kolbenstange 6b anhebt.

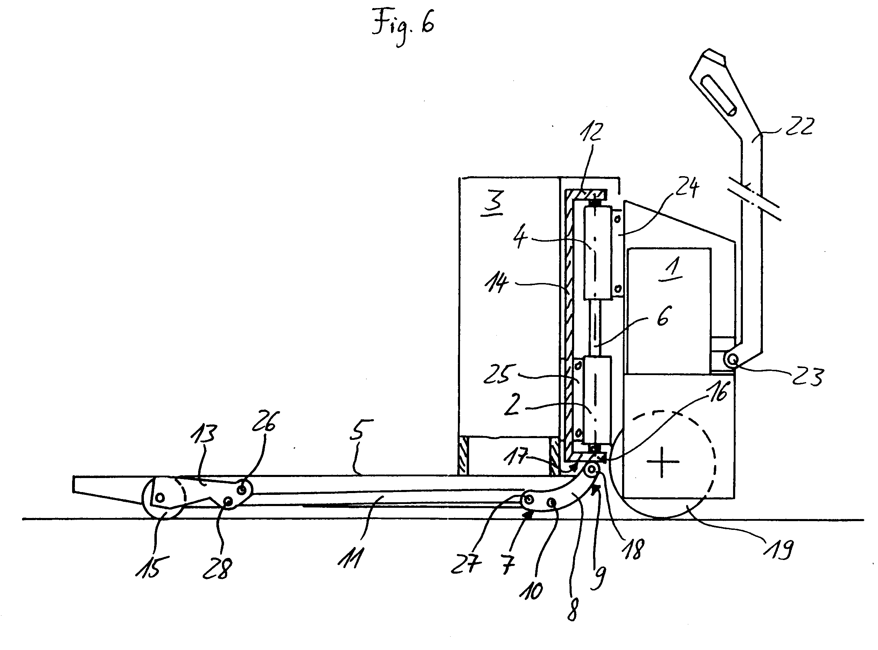

Figur 6 zeigt ein (bevorzugtes) Ausführungsbeispiel eines Hubwagens, desen Funktionen dem des Hubwagens gemäß der Figur 1 mit Ausnahme des Betriebszustandes IV entsprechen. Im Unterschied zu dem Hubwagen gemäß Figur 1 sitzen hier beide Hydraulikzylinder 2, 4 auf einer gemeinsamen Kolbenstange 6 und der Hydraulikzylinder 2 ist mit einem Flansch 25 an dem Lastteil 3 befestigt, während der Hydraulikzylinder 4 mit einem Flansch 24 an dem Antriebsteil 1 fixiert ist. Der Zwischenrahmen 14 weist einen dem ersten Basisschenkel 16 gegenüberliegenden zweiten L-förmigen Basisschenkel 12 auf, wobei den beiden Hydraulikzylindern 2, 4 gemeinsame Kolbenstange 6 zwischen dem ersten und dem zweiten Basisschenkel 16, 12 fest eingespannt ist. Die Kolbenstange 6 und der Zwischenrahmen 14 bilden somit eine quasi "schwimmende" Zwischenrahmeneinheit, zu der sowohl das Antriebsteil 1 als auch das Lastteil 3 unabhängig voneinander relativ in vertikaler Richtung bewegbar sind.

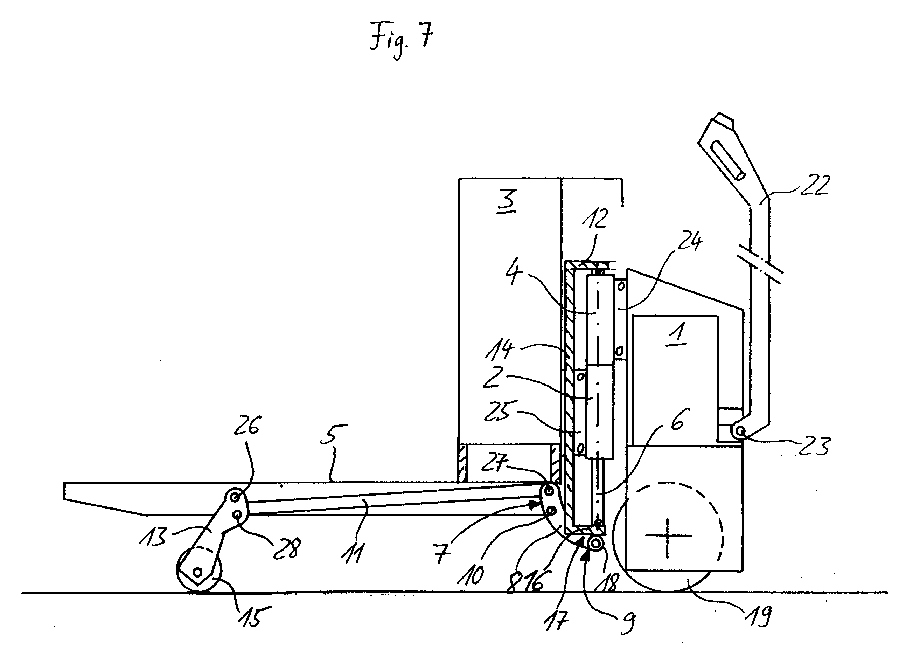

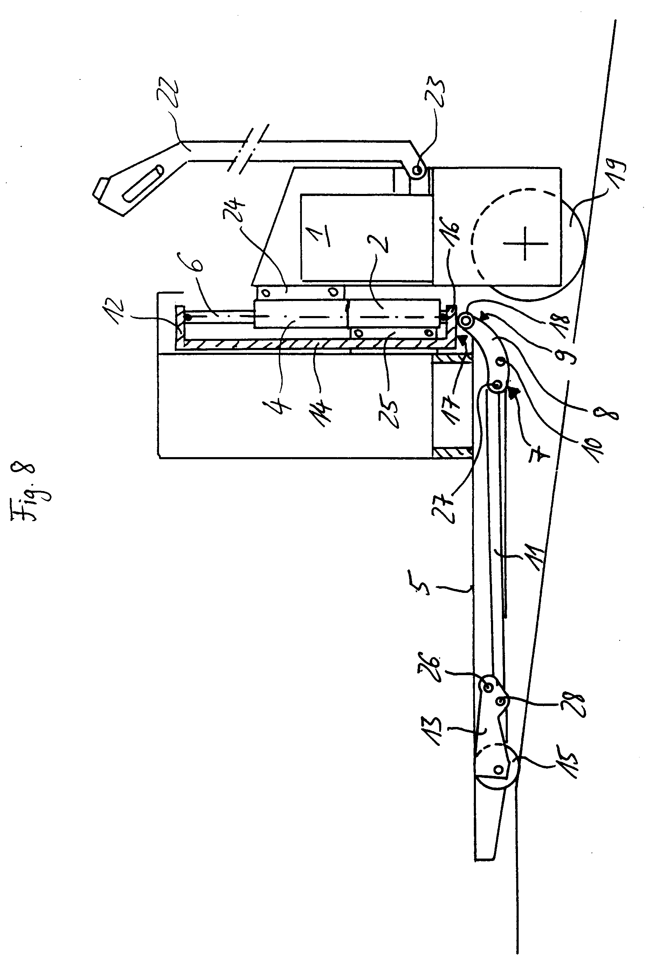

Die weiteren Bauteile dieser Ausführungsform eines Hubwagens sind mit der vorstehend anhand der Figuren 1 - 4 beschriebenen Bauteile identisch, so daß an dieser Stelle nur noch einmal die Betriebszustände II (Parallelhub; Figur 7) und III (Stufenhub; Figur 8) erläutert werden.

Um von dem Grundbetriebszustand I gemäß Figur 6 in den Betriebszustand II gemäß Figur 7 zu gelangen, wird das Lastteil 3 mittels des unteren Hydraulikzylinders 2 relativ zum Zwischenrahmen 14 und auch relativ zum Antriebsteil 1 angehoben. Bei dieser Relativbewegung wird die im wesentlichen aus dem bogenförmigen Schwenkhebel 8 bestehende Höhensteuereinrichtung um die Schwenkachse 10 im Uhrzeigersinn gedreht, so daß die Achsgabeln 13 mit den Lastrollen 15 aus ihrer Ruhelage ausgeschwenkt werden und den Lastträger 5 abstützen.

Um von dem Betriebszustand II in den Betriebszustand III gemäß Figur 8 zu gelangen, wird die beim Übergang vom Grundbetriebszustand I in den Parallelhub gemäß Figur 7 erfolgte Schwenkbewegung des bogenförmigen Schwenkhebels 8 in zwei gleichzeitig ablaufenden Phasen rückgängig gemacht. In der ersten Phase bewegt sich der untere Hydraulikzylinder 2 wieder in seine dem (Grund-)Betriebszustand I entsprechende Stellung zurück, in dem er sich relativ zur Kolbenstange 6 unter der Last des Lastteils 3 absenkt. Allein durch die damit erfolgende Relativbewegung zwischen Lastteil 3 und Zwischenrahmen 14 wird der bogenförmige Schwenkhebel 8 entgegen dem Uhrzeigersinn in seine Ausgangsstellung zurückgeschwenkt, was gleichfalls ein Einschwenken der Achsgabeln 13 in die Ruhelage bewirkt. In der zweiten Phase dieser Bewegung fährt der obere Hydraulikzylinder 4 mit dem daran befestigten Antriebsteil 1 unter Zufuhr von Hydraulikflüssigkeit in seinen unteren Arbeitsraum (nicht dargestellt) relativ zur Kolbenstange 6 nach unten, was einem Absenken des Antriebsteils 1 ohne Einwirkung auf die Höhensteuereinrichtung entspricht.

Die weiteren Übergänge zwischen den genannten Betriebszuständen I - III erfolgen in analoger Weise wie zu den Figuren 1 - 3 beschrieben.

## Patentansprüche

1. Gabelhubwagen,
mit einem Antriebsteil und mit einem Lastteil, das mittels Stelleinrichtungen relativ zum Antriebsteil in vertikaler Richtung bewegbar ist,
wobei zwischen dem Antriebsteil (1) und dem Lastteil (3) ein Zwischenrahmen (14) vorgesehen ist, und wobei das Antriebsteil (1) und das Lastteil (3) jeweils unabhängig voneinander relativ zum Zwischenrahmen mittels mindestens je einer Stelleinrichtung (2,4) in vertikaler Richtung bewegbar sind.

2. Gabelhubwagen nach Anspruch 1, bei welchem unter dem Lastteil im Abstand vom Antriebsteil zur Abstützung mindestens eine Lastrolle vorgesehen ist, deren vertikaler Abstand zum Lastteil mittels einer Höhensteuereinrichtung verstellbar ist,
dadurch gekennzeichnet,
daß die Höhensteuereinrichtung jede Lastrolle in Abhängigkeit von der Relativbewegung zwischen dem Lastteil (3) und dem Zwischenrahmen (14) verstellt.

3. Gabelhubwagen nach Anspruch 2,
dadurch gekennzeichnet,
daß die Höhensteuereinrichtung einen bogenförmigen Schwenkhebel (8) aufweist, dessen eines Ende (7) über das Gestänge (11) gelenkig mit den Achsgabeln (13) der Lastrollen (15) verbunden ist, dessen anderes Ende (9) in Wirkverbindung mit dem Zwischenrahmen (14) steht, und der um eine zwischen seinen Enden (7,9) angeordnete Schwenkachse (10) schwenkbar ist.

4. Gabelhubwagen nach einem der vorstehenden Ansprüche,
dadurch gekennzeichnet,
daß der Zwischenrahmen (14) wenigstens einen ersten L-förmigen Basisschenkel (16) aufweist, der in Wirkverbindung mit dem bogenförmigen Schwenkhebel steht.

5. Gabelhubwagen nach Anspruch 4,
dadurch gekennzeichnet,
daß der Schwenkhebel (8) an seinem dem Gestänge (11) abgewandten Ende (9) eine Gleitrolle (18) aufweist, welche auf der Unterseite (17) des ersten Basisschenkels (16) des Zwischenrahmens (14) gleitend gelagert ist.

6. Gabelhubwagen nach Anspruch 4,
dadurch gekennzeichnet,
daß das dem Gestänge (11) abgewandten Ende (9) des Schwenkhebels (8) mittels eines gelenkigen Zwischenstücks gelenkig mit dem ersten Basisschenkel (16) verbunden ist.

7. Gabelhubwagen nach einem der vorstehenden Ansprüche,
dadurch gekennzeichnet,
daß die Stelleinrichtungen als Hydraulikzylinder (2,4) ausgebildet sind.

8. Gabelhubwagen nach Anspruch 7,
dadurch gekennzeichnet,
daß die Hydraulikzylinder (2,4) mit ihrem Zylindergehäuse am Zwischenrahmen (14) befestigt sind, und daß die Kolbenstange (6a) des einen Hydraulikzylinders (2) mittels Halterungen (20a, 21a) am Lastteil (3) befestigt ist, und die Kolbenstange (6b) des anderen Hydraulikzylinders (4) mittels Halterungen (20b, 21b) am Antriebsteil (1).

9. Gabelhubwagen nach Anspruch 7,
dadurch gekennzeichnet,
daß beide Hydraulikzylinder (2,4) auf einer gemeinsamen Kolbenstange (6) sitzen, und daß der eine Hydraulikzylinder (2) mit einem Flansch (25) am Lastteil (3) befestigt ist, und der andere Hydraulikzylinder (4) mit einem Flansch (24) am Antriebsteil (1).

10. Gabelhubwagen nach Anspruch 9,
dadurch gekennzeichnet,
daß der Zwischenrahmen (14) einen dem ersten Basisschenkel (16) gegenüberliegenden zweiten L-förmigen Basisschenkel (12) aufweist, und daß die gemeinsame Kolbenstange (6) zwischen dem ersten und dem zweiten Basisschenkel (16,12) gehalten ist.

11. Gabelhubwagen nach einem der vorstehenden Ansprüche,
dadurch gekennzeichnet,
daß die Hydraulikzylinder (2,4) über eine hydraulische Steuereinrichtung zusammengeschlossen sind.

12. Gabelhubwagen nach einem der vorstehenden Ansprüche,
dadurch gekennzeichnet,
daß die Höhensteuereinrichtung, das Gestänge (11), der Zwischenrahmen (14) sowie die wenigstens zwei Stelleinrichtungen (2,4) doppelt vorhanden sind, und zwar je einmal zu beiden Seiten des Hubwagens.

## Claims

1. A pallet truck, having a drive part and having a load part which is movable in the vertical direction relative to the drive part by means of adjusting devices, there being provided between the drive part (1) and the load part (3) an intermediate frame (14), and the drive part (1) and the load part (3) each being movable in the vertical direction independently of one another relative to the intermediate frame by means of at least one respective adjusting device (2, 4).

2. A pallet truck according to Claim 1, in which there is provided below the load part, spaced from the drive part, for the purpose of support at least one load roller whereof the vertical spacing from the load part is adjustable by means of a height control device, characterized in that the height control device adjusts each load roller in dependence on the relative movement between the load part (3) and the intermediate frame (14).

3. A pallet truck according to Claim 2, characterized in that the height control device has an arcuate pivotal lever (8) whereof one end (7) is connected in articulated manner to the axial forks (13) of the load rollers (15) by way of the linkage (11) and whereof the other end (9) is in operative connection with the intermediate frame (14), the pivotal lever (8) being pivotal about a pivot axis (10) arranged between its ends (7, 9).

4. A pallet truck according to one of the preceding claims, characterized in that the intermediate frame (14) has at least one first L-shaped base limb (16) which is in operative connection with the arcuate pivotal lever.

5. A pallet truck according to Claim 4, characterized in that the pivotal lever (8) has, at its end (9) remote from the linkage (11), a slide roller (18) which is mounted in sliding manner on the underside (17) of the first base limb (16) of the intermediate frame (14).

6. A pallet truck according to Claim 4, characterized in that the end (9) of the pivotal lever (8) remote from the linkage (11) is connected in articulated manner to the first base limb (16) by means of an articulated intermediate piece.

7. A pallet truck according to one of the preceding claims, characterized in that the adjusting devices are constructed as hydraulic cylinders (2, 4).

8. A pallet truck according to Claim 7, characterized in that the hydraulic cylinders (2, 4) are secured to the intermediate frame (14) by means of their cylinder housings, and in that the piston rod (6a) of the one hydraulic cylinder (2) is secured to the load part (3) by means of mountings (20a, 21a), and the piston rod (6b) of the other hydraulic cylinder (4) is secured to the drive part (1) by means of mountings (20b, 21b).

9. A pallet truck according to Claim 7, characterized in that both hydraulic cylinders (2, 4) are seated on a common piston rod (6), and in that the one hydraulic cylinder (2) is secured to the load part (3) by means of a flange (25) and the other hydraulic cylinder (4) is secured to the drive part (1) by means of a flange (24).

10. A pallet truck according to Claim 9, characterized in that the intermediate frame (14) has a second L-shaped base limb (12) opposite the first base limb (16), and in that the common piston rod (6) is held between the first and the second base limb (16, 12).

11. A pallet truck according to one of the preceding claims, characterized in that the hydraulic cylinders (2, 4) are joined together by way of a hydraulic control device.

12. A pallet truck according to one of the preceding claims, characterized in that the height control device, the linkage (11), the intermediate frame (14) and the at least two adjusting devices (2, 4) are duplicated, one on either side of the truck.

## Revendications

1. Chariot élévateur à fourche
comprenant une partie motrice et une partie de charge qui est mobile, au moyen de dispositifs de réglage, verticalement par rapport à la partie motrice,
entre la partie motrice (1) et la partie de charge (3), un châssis intermédiaire (14) étant prévu et la partie motrice (1) ainsi que la partie de charge (3) étant mobiles verticalement, chacune au moyen d'au moins un dispositif de réglage (2, 4), indépendamment l'une de l'autre par rapport au châssis intermédiaire.

2. Chariot élévateur à fourche selon la revendication 1, dans lequel il est prévu, sous la partie de charge à distance de la partie motrice pour le support de la partie de charge, au moins une roulette de charge, dont la distance verticale par rapport à la partie de charge est réglable au moyen d'un dispositif de commande en hauteur,
caractérisé en ce que
le dispositif de commande en hauteur déplace chaque roulette de charge en fonction du mouvement relatif entre la partie de charge (3) et le châssis intermédiaire (14).

3. Chariot élévateur à fourche selon la revendication 2,
caractérisé en ce que
le dispositif de commande en hauteur présente un levier de pivotement arqué (8) dont une extrémité (7) est reliée, de manière articulée, par une tringlerie (11) aux essieux en fourche (13) des roulettes de charge (15), dont l'autre extrémité (9) est reliée activement au châssis intermédiaire (14), et qui est pivotant autour d'un pivot (10) disposé entre ses extrémités (7, 9).

4. Chariot élévateur à fourche selon l'une des revendications précédentes
caractérisé en ce que
le châssis intermédiaire (14) présente au moins une première arcade (16) en forme de L qui est reliée activement au levier de pivotement arqué.

5. Chariot élévateur à fourche selon la revendication 4,
caractérisé en ce que
le levier de pivotement (8) présente, à son extrémité (19) détournée de la tringlerie (11), un galet-glisseur (18) qui est logé de manière à glisser sur la face inférieure (17) de la première arcade de base (16) du châssis intermédiaire (14).

6. Chariot élévateur à fourche selon la revendication 4,
caractérisé en ce que
l'extrémité (9) détournée de la tringlerie (11) du levier de pivotement (8) est reliée, de manière articulée, au moyen d'une pièce intercalaire articulée, à la première arcade de base (16).

7. Chariot élévateur à fourche selon l'une des revendications précédentes
caractérisé en ce que
les dispositifs de réglage sont des vérins hydrauliques (2, 4).

8. Chariot élévateur à fourche selon la revendication 7,
caractérisé en ce que
les vérins hydrauliques (2, 4) sont fixés par leur carter sur le châssis intermédiaire (14) et en ce que la tige de piston (6a) du vérin hydraulique (2) est fixée par des fixations (20a, 21a) à la partie de charge (3) et la tige de piston (6b) de l'autre vérin hydraulique (4) est fixée à la partie motrice (1) au moyen de fixations (20b, 21b).

9. Chariot élévateur à fourche selon la revendication 7,
caractérisé en ce que
les deux vérins hydrauliques (2, 4) reposent sur une tige de piston commune (6) et en ce que le vérin hydraulique (2) est fixé par un flasque (25) sur la partie de charge (3) et que l'autre vérin hydraulique (4) est fixé par un flasque (24) sur la partie motrice (1).

10. Chariot élévateur à fourche selon la revendication 9,
caractérisé en ce que
le châssis intermédiaire (14) présente une seconde arcade de base en forme de L (12) opposée à la première arcade de base (16), et en ce que la tige de piston commune (6) est maintenue entre la première et la seconde arcade de base (16, 12).

11. Chariot élévateur à fourche selon l'une des revendications précédentes
caractérisé en ce que
les vérins hydrauliques (2, 4) sont rassemblés par un dispositif de commande hydraulique.

12. Chariot élévateur à fourche selon l'une des revendications précédentes
caractérisé en ce que
le dispositif de commande en hauteur, la tringlerie (11), le châssis intermédiaire (14) ainsi qu'au moins deux dispositifs de réglage (2, 4) sont prévus en double et ce, des deux côtés du chariot élévateur.
